(19) Europäisches Patentamt
European Patent Office
Office européen des brevets

(11) EP 2 406 327 B1

(12) **EUROPEAN PATENT SPECIFICATION**

(45) Date of publication and mention of the grant of the patent:
**14.08.2013 Bulletin 2013/33**

(21) Application number: **10703043.9**

(22) Date of filing: **02.02.2010**

(51) Int Cl.:
*C09B 69/10* (2006.01) *C11D 3/40* (2006.01)
*D06L 3/12* (2006.01) *D06P 1/00* (2006.01)

(86) International application number:
**PCT/EP2010/051220**

(87) International publication number:
**WO 2010/102861 (16.09.2010 Gazette 2010/37)**

(54) **DYE-POLYMERS FORMULATIONS**

FARBPOLYMERFORMULIERUNGEN

FORMULES DE POLYMÈRES COLORANTS

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **12.03.2009 EP 09155034**

(43) Date of publication of application:
**18.01.2012 Bulletin 2012/03**

(73) Proprietors:
- **Unilever PLC**
  **London EC4Y 0DN (GB)**
  Designated Contracting States:
  **CY GB IE MT**
- **Unilever NV**
  **3013 AL Rotterdam (NL)**
  Designated Contracting States:
  **AT BE BG CH CZ DE DK EE ES FI FR GR HR HU IS IT LI LT LU LV MC MK NL NO PL PT RO SE SI SK SM TR**

(72) Inventors:
- **BATCHELOR, Stephen Norman**
  **Merseyside CH63 3JW (GB)**
- **BIRD, Jayne Michelle**
  **Merseyside CH63 3JW (GB)**
- **CHEN, Wei**
  **Shanghai 200335 (CN)**
- **JOYCE, Susan Barbara**
  **Merseyside CH63 3JW (GB)**
- **TAO, Qingsheng**
  **Shanghai 200335 (CN)**
- **WANG, Jinfang**
  **Shanghai 200335 (CN)**

(74) Representative: **Avila, David Victor**
**Unilever Patent Group**
**Colworth House**
**Sharnbrook**
**Bedford**
**MK44 1LQ (GB)**

(56) References cited:
**EP-A- 0 128 619**
**WO-A-2005/068596**
**FR-A- 1 523 820**
**US-A- 3 926 830**

- **ASQUITH R S ET AL: "SELF-COLOURED POLYMERS BASED ON ANTHRAQUINONE RESIDUES" JOURNAL OF THE SOCIETY OF DYERS AND COLOURISTS, SOCIETY OF DYERS AND COLOURISTS. BRADFORD, GB, vol. 93, 1 April 1977 (1977-04-01), pages 114-125, XP009048725 ISSN: 0037-9859**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

**Description**

FIELD OF INVENTION

The present invention relates to the delivery of dyes to fabrics.

BACKGROUND OF THE INVENTION

WO2005/003274, to Unilever, discloses that shading dyes may be included in detergent formulations to enhance the whiteness of garments.

WO2006/055787, to Proctor and Gamble, describes reactive dyes attached to cellulose ether in laundry formulations. The functional reactive group of the dye reacts with OH, SH or $NH_2$ groups of the polymer by an addition or substitution reaction producing a covalent bond. The polymer must contain these groups for reaction to occur. The reactive dyes used are negatively charged. The shading benefit is found predominately on cellulosic garments

WO2006/055843, WO2007/087252, W02008/091524 and WO2008/100445 (all Milliken) describe dyes linked to polyether groups via an amine group pendant to an aromatic ring, for use in laundry formulations. The shading benefit is found predominately on cellulosic garments.

WO2008/009579 (Ciba) discloses polymer chains with pendant cationic charged dyes for use in hair dyeing.

US 3926830 discloses dye indicators that are linked to polymers; dye indicators are charged. Use of the polymeric dye indicators are for colouring water.

EP 0128619 discloses use of insoluble styrene dye polymers.

WO 2005/068598 and WO 2005/068596 disclose Liquitint Violet CT for use in laundry. Liquitint Violet CT is only disclosed in WO 2005/068598 as a polymeric colourent and, from the examples, capable of shading cotton.

It would be desirable to have a polymer dye that deposit to both cotton and polyester fabrics, found in domestic wash loads.

SUMMARY OF THE INVENTION

The dye-polymers of the present invention deposit to both cotton and polyester fabrics.

In one aspect the present invention provides a detergent composition comprising from 2 to 70 wt % of a surfactant together with from 0.0001 to 10 wt%, preferably 0.01 to 1 wt %, of a dye-polymer of molecular weight of at least 500, wherein the dye-polymer is obtainable by polymerisation of:

(a) a dye monomer, the dye monomer is an uncharged alkene covalently bound to a dye, the dye monomer having a molar extinction coefficient at a wavelength in the range 400 to 700nm of at least 1000 $mol^{-1}$ L $cm^{-1}$, preferably greater than 4000 $mol^{-1}$ L $cm^{-1}$, and

(b) one or more further alkene comonomer(s), the alkene monomer(s) having molar extinction coefficient at a wavelength in the range 400 to 700nm that is less than 100 $mol^{-1}$ L $cm^{-1}$, preferably less than 10 $mol^{-1}$ L $cm^{-1}$.

The dye-polymer is obtained (formed) by polymerisation of integers (a) and (b) as detailed above.

In another aspect the present invention provides a domestic method of treating a textile, the method comprising the steps of:

(i) treating a textile with an aqueous solution of the dye-polymer, the aqueous solution comprising from 10 ppb to 100 ppm of the dye-polymer; and, from 0.0 g/L to 3 g/L, preferably 0.3 to 2 g/L, of a surfactant;
(ii) optionally rinsing; and,
(iii) drying the textile.

The detergent composition as described herein is most preferably a granular detergent composition.

DYE MONOMER

The dye monomer is an organic molecule which when dissolved in an organic solvent has a molar absorption extinction coefficient of 1000 $mol^{-1}$ L $cm^{-1}$, preferably greater than 4000 $mol^{-1}$ L $cm^{-1}$ at a wavelength in the range 400-700nm, preferably 500-650nm, most preferably 540-600nm.

Molar absorption coefficients are preferably measured in an organic solvent, preferably propan-2-ol, using a 1, 5 or 10cm cell.

The dye monomer is uncharged in aqueous solution at a pH in the range from 7 to 11. The dye monomer is

devoid of polar solubilizing groups. In particular the dye monomer does not contain any sulphonic acid ($SO_3^-$), carboxylic acid ($CO_2^-$), or quaternary ammonium groups.

The dye is selected from organic dyes selected from the following chromophore classes: anthraquinone, azo and methine, most preferably anthraquinone and mono-azo. Dyes are described in Industrial Dyes (K.Hunger ed, Wiley VCH 2003, ISBN 3-527-30426-6).

Preferably, the dye monomer is of the form:

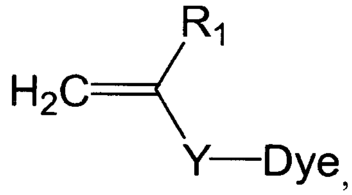

wherein Y is an organic bridging group covalently connecting a dye to the alkene moiety of the dye monomer and $R_1$ is selected from: H; alkyl; aryl; halogen; ester; acid amide; and, CN.

When $R_1$ is a phenyl or benzyl group, the aromatic is not substituted by OH.

Preferably, the most direct connection (Y) of an aromatic group of the dye to the alkene carbon carrying $R_1$ is spaced by 1 to 8 atoms, most preferably 3 to 6; the atoms are preferably selected from: C; N; O; and, S. The alkene may also be directly connected to the dye and in this case Y is absent.

Preferably, the organic bridging group (Y) is selected from: $-CONR_4-$, $-NR_4CO-$, $-COOR_9-$, $-NR_9-$, -O-, -S-, $-SO_2-$, $-SO_2NR_4-$, - $N(COR_4)-$, and $-N(SO_2R_4)-$, wherein $R_9$ is selected from H, C1-C6 branched or linear alkyl, phenyl and benzyl groups, wherein $R_4$ has 0 to 1 spacing units selected from: -O-; -S-; $-SO_2-$; - C(O)O-; -OC(O)-; and an amine. Most preferably, the organic bridging group is $-CONR_4-$. Most preferably, wherein $R_4$ is selected: from H and Me. Preferably, the Y group is bound directly to a carbon atom of an aromatic ring of the dye.

$R_1$ is preferably selected from: H; Me; Et; Pr; $CO_2$C1-C4 branched and linear alkyl chains; phenyl; benzyl; CN; Cl; and, F. Most preferably $R_1$ is H or Me.

A preferred dye-monomer is of the form:

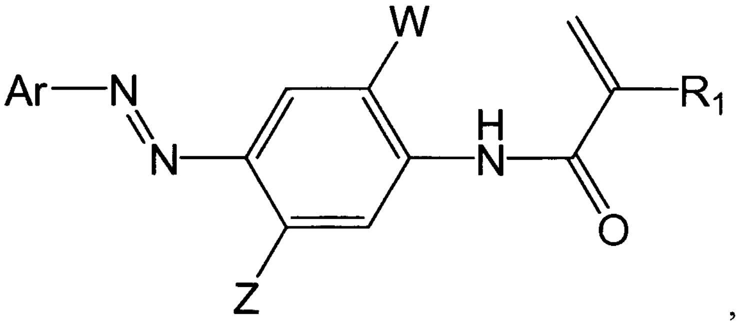

,

wherein Ar is an aromatic or heteroaromatic group and Z is selected from: H; $CH_3$; Cl; and, $NHCOCH_3$ and W is selected from H; $CH_3O$; $C_2H_5O$; and, Cl.

Another preferred dye-monomer is of the form:

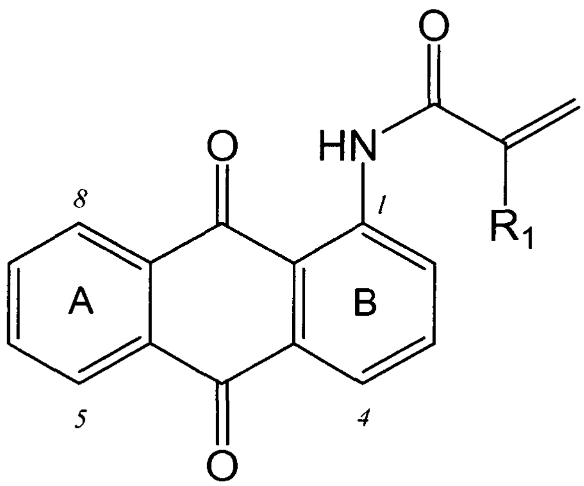

,

wherein the A and B ring are further substituted. Preferred groups include $NH_2$, NHAr, $NHR_5$, $NR_5R_6$, OH, Cl, Br, CN, OAr, $NO_2$, $SO_2OAr$, $CH_3$ and $NHCOC(R1)=CH_2$, wherein $R_5$ and $R_6$ are independently selected from C1-C8 branched, cyclic or linear alkyl which may be substituted by OH, OMe, Cl or CN.

Most preferably the dye is substituted at the 4, 5 or 8 position by at least one groups selected from $NH_2$, NHAr, and $NHR_5$, $NR_5R_6$, Most preferably when present OH and $NO_2$ groups are at 4, 5 or 8 position and no more than 2 $NO_2$ groups are present.

Suitable dyes may be prepared by acylation of an $NH_2$ of an anthraquinone disperse dye, preferably selected from: disperse blue 1; disperse blue 5; disperse blue 6; disperse blue 9; disperse blue 19; disperse blue 28; disperse blue 40; disperse blue 56; disperse blue 60; disperse blue 81; disperse violet 1; disperse violet 4 and, disperse violet 8.

A further example of a suitable dye is disperse blue 7.

The dye monomer may be further substituted by uncharged organic groups having a total molecular weight of less than 400. Preferred uncharged organic groups are selected from: $NHCOCH_3$; $CH_3$; $C_2H_5$; $CH_3O$; $C_2H_5O$; amine; Cl; F; Br; I; $NO_2$; $CH_3SO_2$; and, CN.

Synthesis of a variety of dye monomers is discussed in US4943617 (BASF), US5055602 (Bausch and Lomb) WO2005/021663 (Eastman), US5362812 (3M).

Suitable and preferred dye monomers include:

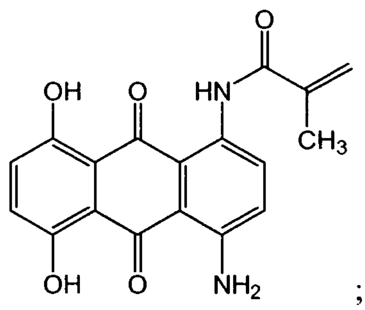

;

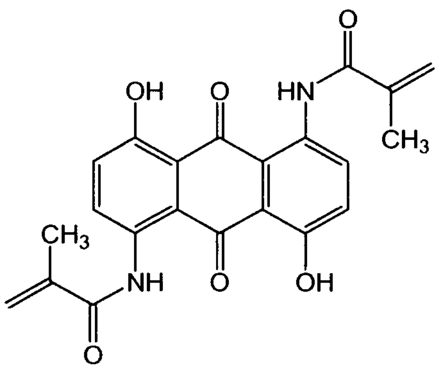

;

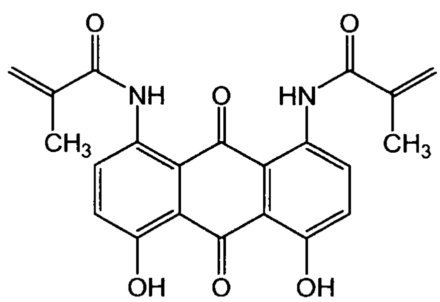

;

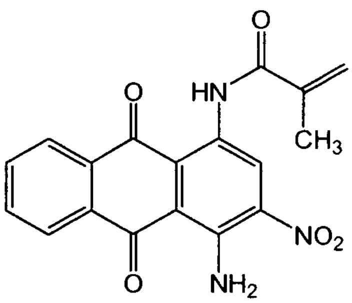

;

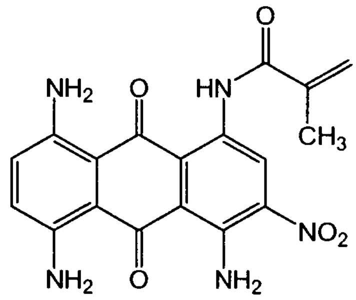

;

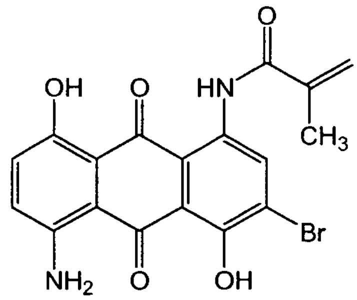

;

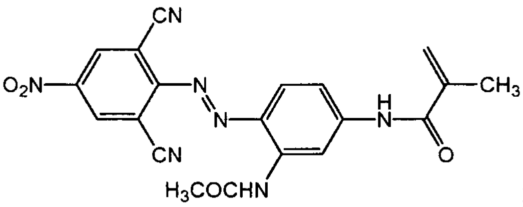

;

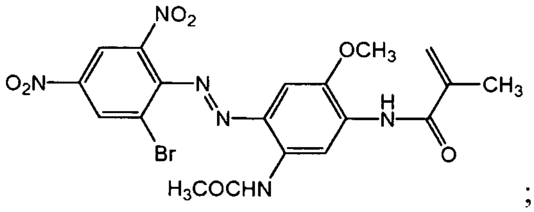

;

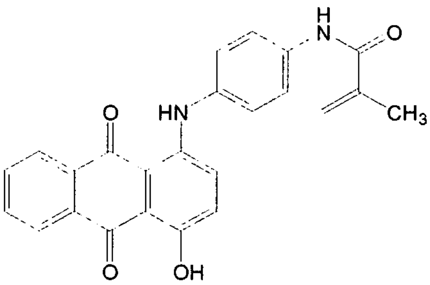

; and,

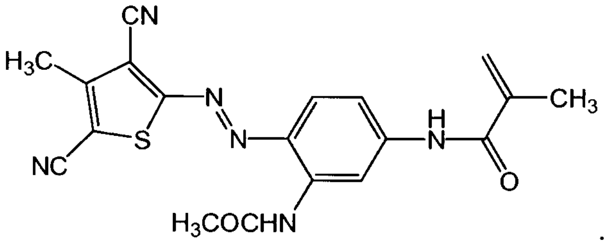

.

Further examples of dye monomers are:

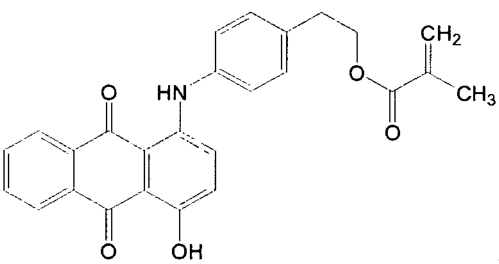

;

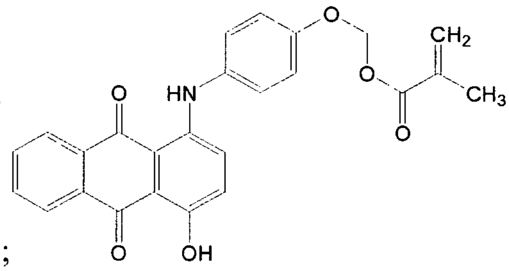

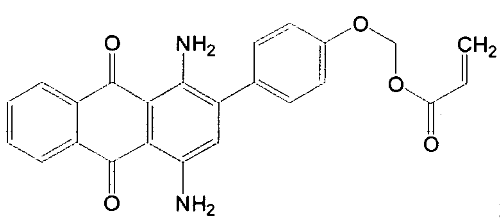

;

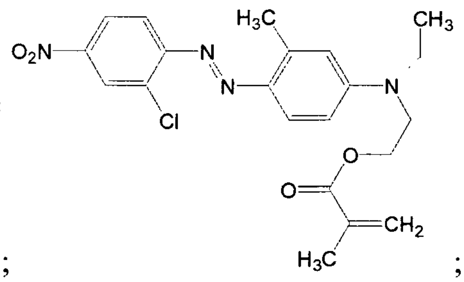

;

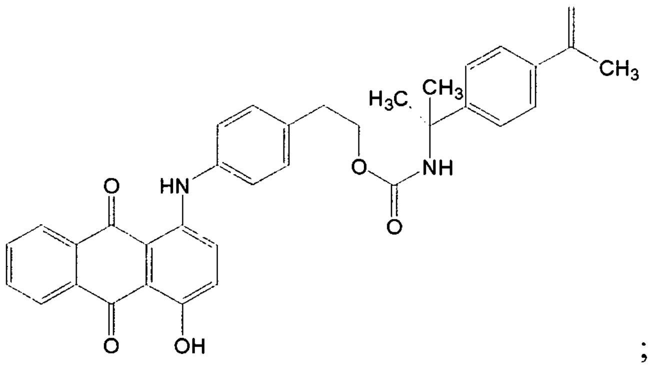

; and,

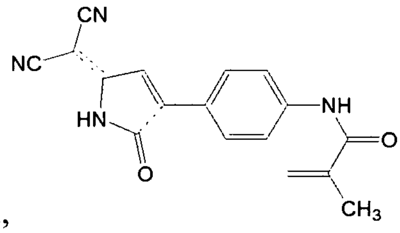

.

ALKENE COMONOMERS

The comonomer is preferably of the form:

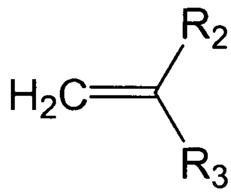

wherein $R_2$ and $R_3$ are independently selected from: H, C1-C8 branched, cyclic and linear alkyl chains, C(O)OH, $CO_2$C1-C18 branched and linear alkyl chains, -C(O)N (C1-C18)2; -C(O)N(C1-C18)H; -C(O)NH2; heteroaromatic, phenyl, benzyl, polyether, cyano, Cl and F. Where C1-C18 is specified a preferred range is C1 to C4.

The $R_2$ and $R_3$ of the comonomer may be further substituted by charged and uncharged organic groups having a total molecular weight of less than 400. Preferred uncharged organic groups are selected from: $NHCOCH_3$, $CH_3$, $C_2H_5$, OH, $CH_3O$, $C_2H_5O$, amine, Cl, F, Br, I, $NO_2$, $CH_3SO_2$, and CN.

The phenyl, benzyl and alkyl chains may be substituted by further organic groups selected from: OH; F; Cl; alkoxy (preferably $OCH_3$), $SO_3^-$, COOH, amine, quaternary amine, acid amide and ester. When phenyl or benzyl groups are present, the aromatic is not substituted by OH.

Examples of suitable co-monomers include. Preferred co-monomer are indicated.

| | | |
|---|---|---|
| 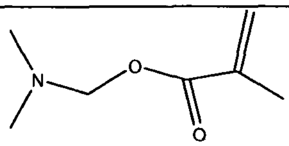 DMAEMA Preferred | 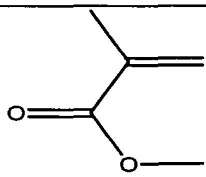 methyl methacrylate | 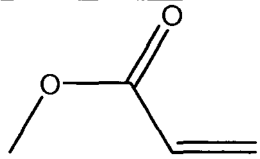 methyl acrylate |
| 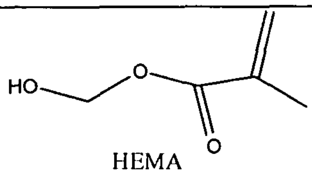 HEMA Preferred | 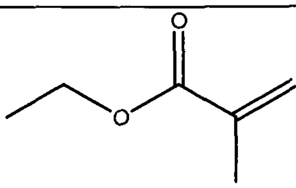 ethyl methacrylate | 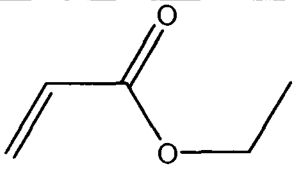 ethyl acrylate |
| 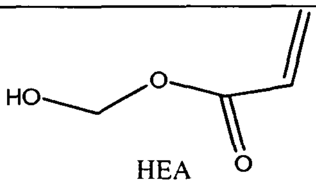 HEA Preferred | 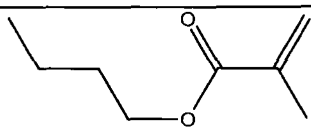 butyl methacrylate | 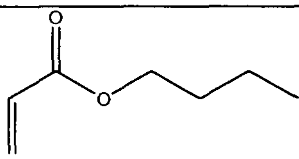 butyl acrylate |
| 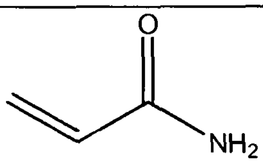 acryl amide Preferred | 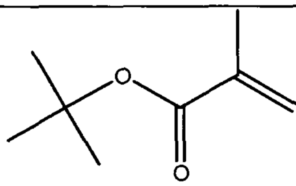 t-butyl methacrylate | 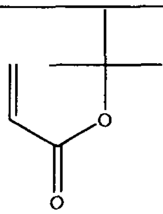 t-butyl acrylate |
| 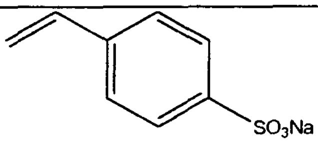 sodium 4-vinylbenzenesulfonate Preferred | 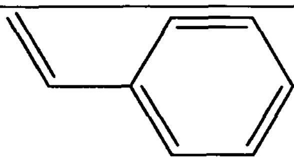 styrene | 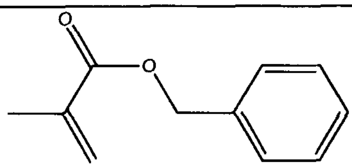 benzyl methacrylate |
| 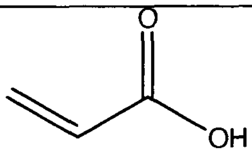 acrylic acid Preferred | 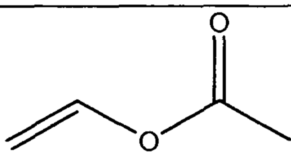 vinyl acetate | 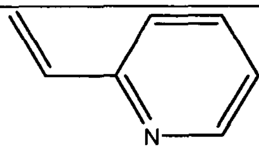 vinyl pyridine |

| | | |
|---|---|---|
| 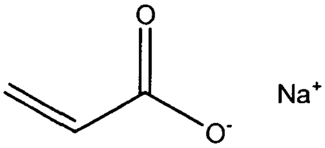<br>sodium acrylic acid<br>preferred | 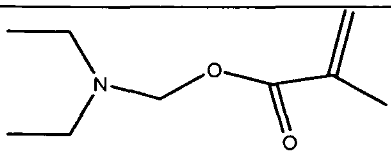<br>DEAEMA<br>preferred | 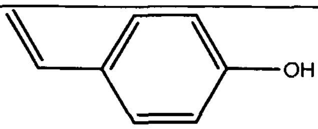<br>4-vinylphenol |
| 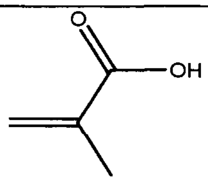<br>methacrylic acid<br>Preferred | 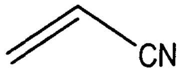<br>acrylonitrile | 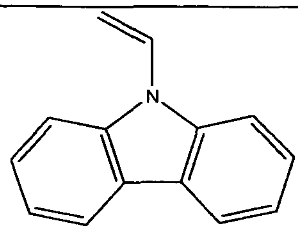<br>9-vinyl-9*H*-carbazole |
| 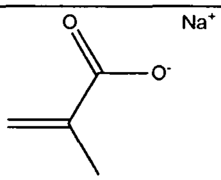<br>sodium methacrylic acid<br>Preferred | 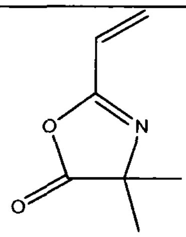<br>4.4-dimethyl-2-vinyloxazol-5(4*H*)-one | 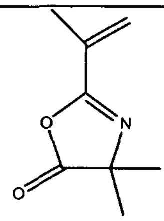<br>4.4-dimethyl-2-(prop-1-en-2-yl)oxazol-5(4*H*)-one |
| 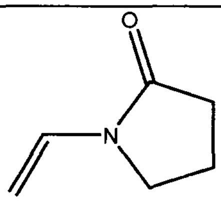<br>vinyl pyrrolidone<br>Preferred | 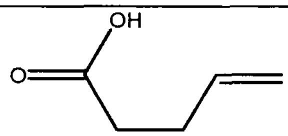<br>4-Pentenoic acid | 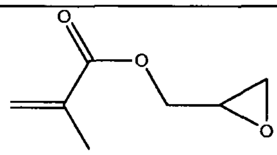<br>glycidyl methacrylate |
| 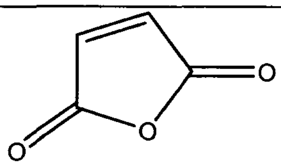<br>Maleic anhydride | 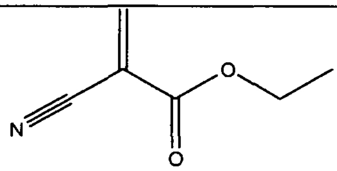<br>Ethyl 2-cyanoacrylate | 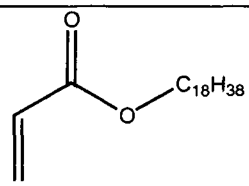<br>stearyl acrylate |
| 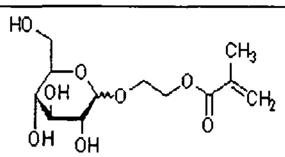<br>**Glycosyloxyethyl methacrylate** | 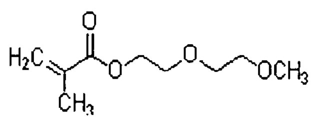<br>**Di(ethylene glycol) methyl ether methacrylate** | 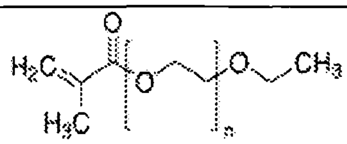<br>**Poly(ethylene glycol) ethyl ether methacrylate** |

| | | |
|---|---|---|
| 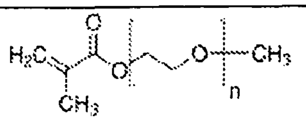 **Poly(ethylene glycol) methyl ether methacrylate** | 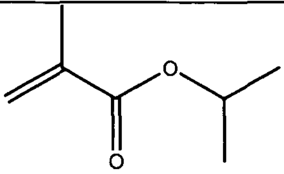 isopropyl methacrylate | 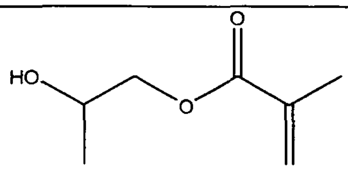 2-hydroxypropyl methacrylate |
| 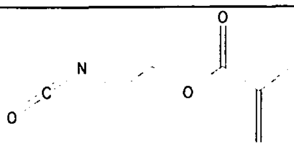 2-Isocyanatoethyl methacrylate | 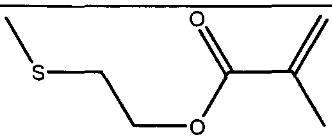 2-(Methylthio)ethyl methacrylate | 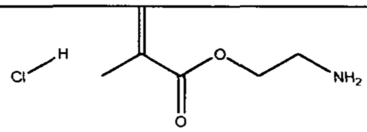 2-Aminoethyl methacrylate hydrochloride<br>Preferred |
| 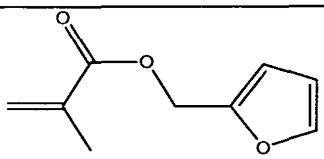 Furfuryl methacrylate | 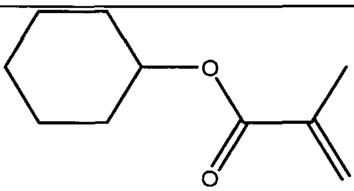 Cyclohexyl methacrylate | 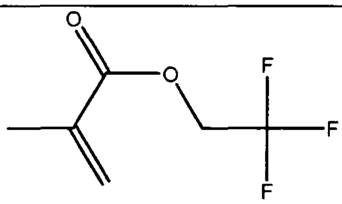 2,2,2-Trifluoroethyl methacrylate |
| 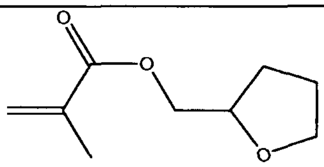 Tetrahydrofurfuryl methacrylate | 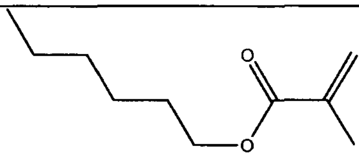 Hexyl methacrylate | 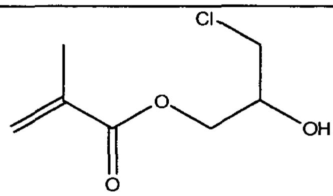 3-Chloro-2-hydroxypropyl methacrylate |
| 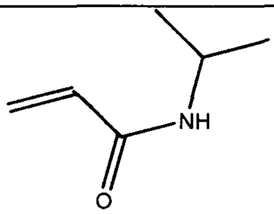 *N*-isopropylacrylamide<br>Preferred | 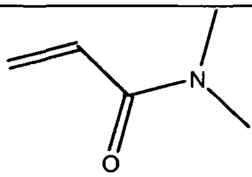 *N,N*-dimethylacrylamide<br>preferred | 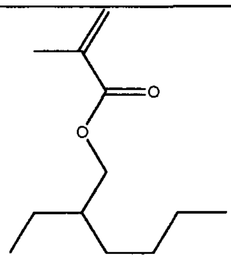 2-ethylhexyl methacrylate |
| 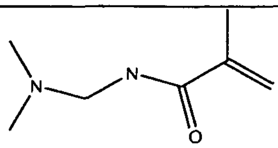 2-(dimethylamino)ethyl methacrylamide<br>Preferred | 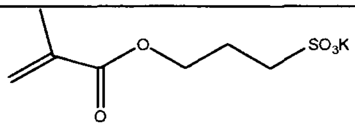 Potassium 3-sulfopropyl methacrylate<br>preferred | 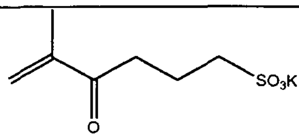 potassium 5-methyl-4-oxohex-5-ene-1-sulfonate<br>preferred |

| | | |
|---|---|---|
| 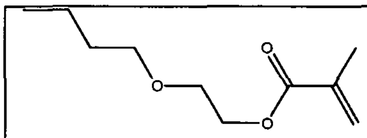 2-Butoxyethyl methacrylate | 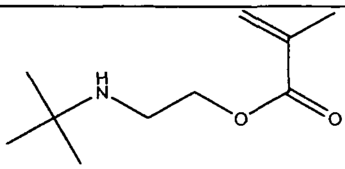 2-(tert-Butylamino)ethyl methacrylate | |

Mixtures of co-monomer are used, and >50wt%, more preferably >80wt%, of the co-monomers are selected from co-monomers that have a molecular weight of less than 300 and contain an amine group.

DYE POLYMER

Preferably, the dye polymer is blue or violet in colour. Preferably the dye polymer gives a blue or violet colour to the cloth with a hue angle of 250-345, more preferably 265 to 330, most preferably 270 to 300. The cloth used to determine the hue angle is white bleached non-mercerised woven cotton sheeting.

The polymer is made by co-polymerisation of the dye monomer with suitable unsaturated organic co-monomers.

Preferably the polymer contains 0.1 to 30 Molar% dye monomers units, preferably 2 to 15 Molar%.

The monomers within the polymer may be arranged in any suitable manner. For example as Alternating co-polymers possess regularly alternating monomer residues; Periodic copolymers have monomer residue types arranged in a repeating sequence; Random copolymers have a random sequence of monomer residue types; Statistical copolymers have monomer residues arranged according to a known statistical rule; Block copolymers have two or more homopolymer subunits linked by covalent bonds. The polymer should have a molecular weight 500 and greater, preferably 2000 and greater, preferably 5000 and greater. In this context the molecular weight is the number average molecular weight. This is the ordinary arithmetic mean of the molecular weights of the individual macromolecules. It is determined by measuring the molecular weight of j polymer molecules, summing the weights, and dividing by j. Molecular weights are determined by Gel Permeations Chromatography.

It is preferred that the dye-polymer is soluble in surfactant solution. Specifically that at 1g/L sodium dodecyl sulfate aqueous solution at pH=7 the dye polymer has a solubility of greater than 1mg/L, preferably greater than 10mg/L. Water solubility is enhanced by the presence of hydroxy, amino and charged groups in the polymer, preferably anionic charged groups.

Preferably the polymer is of the form:

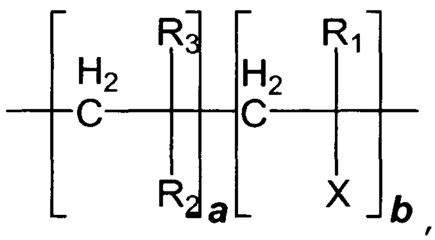

wherein X = Y-Dye.

Preferably, a is greater than b (a>b). More preferably the ratio a:b is from 99.9:0.1 to 70:30.

It is preferred that the dye-polymer has a number average molecular weight in the range from 500 to 500000, preferably from 1000 to 100000, more preferably 5000 to 50000.

For addition to a granular formulation the polymer dye may be added to the slurry to be spray dried or preferably added via post-dosed granules.

In a preferred embodiment the polymer dye powder obtained from the polymer dye synthesis is mixed with a $Na_2SO_4$ or NaCl or pre-prepared granular base or full detergent formulation to give a 0.1 to 20 polymer dye wt% mixture. This dry mix is then mixed into the granular formulation. The polymer dye powder is preferably formed by drying a liquid slurry or solution of the dye, for example by vacuum drying, freeze drying, drying in drum dryers, Spin Flash ® (Anhydro), but most preferably by spray drying. The polymer dye powder may be ground before, during or after the making of the slurry. This grinding is preferably accomplished in mills, such as for example ball, swing, bead or sand mills, or in kneaders.

Other ingredients such as dispersants or alkali metal salts may be added to the liquid slurry. The polymer dye powder preferably contains 20 to 100 wt% of the dye.

Preferably, the polymer dye powder has an average particle size, APS, from 0.1 to 300 microns, preferably 10

to 100 microns. Preferably this is as measured by a laser diffraction particle size analyser, preferably a Malvern HP with 100 mm lens.

SURFACTANT

The composition comprises between 2 to 70 wt percent of a surfactant, most preferably 10 to 30 wt %. In general, the nonionic and anionic surfactants of the surfactant system may be chosen from the surfactants described "Surface Active Agents" Vol. 1, by Schwartz & Perry, Interscience 1949, Vol. 2 by Schwartz, Perry & Berch, Interscience 1958, in the current edition of "McCutcheon's Emulsifiers and Detergents" published by Manufacturing Confectioners Company or in "Tenside-Taschenbuch", H. Stache, 2nd Edn., Carl Hauser Verlag, 1981. Preferably the surfactants used are saturated.

Suitable nonionic detergent compounds which may be used include, in particular, the reaction products of compounds having a hydrophobic group and a reactive hydrogen atom, for example, aliphatic alcohols, acids, amides or alkyl phenols with alkylene oxides, especially ethylene oxide either alone or with propylene oxide. Specific nonionic detergent compounds are $C_6$ to $C_{22}$ alkyl phenol-ethylene oxide condensates, generally 5 to 25 EO, i.e. 5 to 25 units of ethylene oxide per molecule, and the condensation products of aliphatic $C_8$ to $C_{18}$ primary or secondary linear or branched alcohols with ethylene oxide, generally 5 to 40 EO.

Suitable anionic detergent compounds which may be used are usually water-soluble alkali metal salts of organic sulphates and sulphonates having alkyl radicals containing from about 8 to about 22 carbon atoms, the term alkyl being used to include the alkyl portion of higher acyl radicals. Examples of suitable synthetic anionic detergent compounds are sodium and potassium alkyl sulphates, especially those obtained by sulphating higher $C_8$ to $C_{18}$ alcohols, produced for example from tallow or coconut oil, sodium and potassium alkyl $C_9$ to $C_{20}$ benzene sulphonates, particularly sodium linear secondary alkyl $C_{10}$ to $C_{15}$ benzene sulphonates; and sodium alkyl glyceryl ether sulphates, especially those ethers of the higher alcohols derived from tallow or coconut oil and synthetic alcohols derived from petroleum. The preferred anionic detergent compounds are sodium $C_{11}$ to $C_{15}$ alkyl benzene sulphonates and sodium $C_{12}$ to $C_{18}$ alkyl sulphates. Also applicable are surfactants such as those described in EP-A-328 177 (Unilever), which shows resistance to salting-out, the alkyl polyglycoside surfactants described in EP-A-070 074, and alkyl monoglycosides.

Preferred surfactant systems are mixtures of anionic with nonionic detergent active materials, in particular the groups and examples of anionic and nonionic surfactants pointed out in EP-A-346 995 (Unilever). Especially preferred is surfactant system that is a mixture of an alkali metal salt of a $C_{16}$ to $C_{18}$ primary alcohol sulphate together with a $C_{12}$ to $C_{15}$ primary alcohol 3 to 7 EO ethoxylate.

The nonionic detergent is preferably present in amounts greater than 10%, e.g. 25 to 90 wt % of the surfactant system. Anionic surfactants can be present for example in amounts in the range from about 5% to about 40 wt % of the surfactant system.

In another aspect which is also preferred the surfactant may be a cationic such that the formulation is a fabric conditioner.

CATIONIC COMPOUND

When the present invention is used as a fabric conditioner it needs to contain a cationic compound.

Most preferred are quaternary ammonium compounds.

It is advantageous if the quaternary ammonium compound is a quaternary ammonium compound having at least one $C_{12}$ to $C_{22}$ alkyl chain.

It is preferred if the quaternary ammonium compound has the following formula:

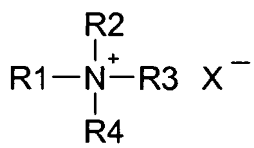

in which $R^1$ is a $C_{12}$ to $C_{22}$ alkyl or alkenyl chain; $R^2$, $R^3$ and $R^9$ are independently selected from $C_1$ to $C_4$ alkyl chains and $X^-$ is a compatible anion. A preferred compound of this type is the quaternary ammonium compound cetyl trimethyl quaternary ammonium bromide.

A second class of materials for use with the present invention are the quaternary ammonium of the above structure in which $R^1$ and $R^2$ are independently selected from $C_{12}$ to $C_{22}$ alkyl or alkenyl chain; $R^3$ and $R^4$ are independently selected from $C_1$ to $C_4$ alkyl chains and $X^-$ is a compatible anion.

A detergent composition according to claim 1 in which the ratio of (ii) cationic material to (iv) anionic surfactant

is at least 2:1.

Other suitable quaternary ammonium compounds are disclosed in EP 0 239 910 (Proctor and Gamble).

It is preferred if the ratio of cationic to nonionic surfactant is from 1:100 to 50:50, more preferably 1:50 to 20:50.

The cationic compound may be present from 1.5 wt % to 50 wt % of the total weight of the composition. Preferably the cationic compound may be present from 2 wt % to 25 wt %, a more preferred composition range is from 5 wt % to 20 wt %.

The softening material is preferably present in an amount of from 2 to 60% by weight of the total composition, more preferably from 2 to 40%, most preferably from 3 to 30% by weight.

The composition optionally comprises a silicone.

## BUILDERS OR COMPLEXING AGENTS

Builder materials may be selected from 1) calcium sequestrant materials, 2) precipitating materials, 3) calcium ion-exchange materials and 4) mixtures thereof.

Examples of calcium sequestrant builder materials include alkali metal polyphosphates, such as sodium tripolyphosphate and organic sequestrants, such as ethylene diamine tetraacetic acid.

Examples of precipitating builder materials include sodium orthophosphate and sodium carbonate.

Examples of calcium ion-exchange builder materials include the various types of water-insoluble crystalline or amorphous aluminosilicates, of which zeolites are the best known representatives, e.g. zeolite A, zeolite B (also known as zeolite P), zeolite C, zeolite X, zeolite Y and also the zeolite P-type as described in EP-A-0,384,070.

The composition may also contain 0-65 % of a builder or complexing agent such as ethylenediaminetetraacetic acid, diethylenetriamine-pentaacetic acid, alkyl- or alkenylsuccinic acid, nitrilotriacetic acid or the other builders mentioned below. Many builders are also bleach-stabilising agents by virtue of their ability to complex metal ions.

Zeolite and carbonate (carbonate (including bicarbonate and sesquicarbonate) are preferred builders.

The composition may contain as builder a crystalline aluminosilicate, preferably an alkali metal aluminosilicate, more preferably a sodium aluminosilicate. This is typically present at a level of less than 15%w. Aluminosilicates are materials having the general formula:

$$0.8\text{-}1.5\ M_2O.\ Al_2O_3.\ 0.8\text{-}6\ SiO_2$$

where M is a monovalent cation, preferably sodium. These materials contain some bound water and are required to have a calcium ion exchange capacity of at least 50 mg CaO/g.

The preferred sodium aluminosilicates contain 1.5-3.5 $SiO_2$ units in the formula above. They can be prepared readily by reaction between sodium silicate and sodium aluminate, as amply described in the literature. The ratio of surfactants to alumuminosilicate (where present) is preferably greater than 5:2, more preferably greater than 3:1.

Alternatively, or additionally to the aluminosilicate builders, phosphate builders may be used. In this art the term 'phosphate' embraces diphosphate, triphosphate, and phosphonate species. Other forms of builder include silicates, such as soluble silicates, metasilicates, layered silicates (e.g. SKS-6 from Hoechst).

Preferably the laundry detergent formulation is a non-phosphate built laundry detergent formulation, i.e., contains less than 1 wt% of phosphate.

## FLUORESCENT AGENT

The composition preferably comprises a fluorescent agent (optical brightener). Fluorescent agents are well known and many such fluorescent agents are available commercially. Usually, these fluorescent agents are supplied and used in the form of their alkali metal salts, for example, the sodium salts. The total amount of the fluorescent agent or agents used in the composition is generally from 0.005 to 2 wt %, more preferably 0.01 to 0.1 wt %. Preferred classes of fluorescer are: Di-styryl biphenyl compounds, e.g. Tinopal (Trade Mark) CBS-X, Di-amine stilbene di-sulphonic acid compounds, e.g. Tinopal DMS pure Xtra and Blankophor (Trade Mark) HRH, and Pyrazoline compounds, e.g. Blankophor SN. Preferred fluorescers are: sodium 2 (4-styryl-3-sulfophenyl)-2H-napthol[1,2-d]triazole, disodium 4,4'-bis{[(4-anilino-6-(N methyl-N-2 hydroxyethyl) amino 1,3,5-triazin-2-yl)]amino}stilbene-2-2' disulfonate, disodium 4,4'-bis{[(4-anilino-6-morpholino-1,3,5-triazin-2-yl)]amino} stilbene-2-2' disulfonate, and disodium 4,4'-bis(2-sulfostyryl)biphenyl.

It is preferred that the aqueous solution used in the method has a fluorescer present. When a fluorescer is present in the aqueous solution used in the method it is preferably in the range from 0.0001 g/l to 0.1 g/l, preferably 0.001 to 0.02 g/l.

PERFUME

Preferably the composition comprises a perfume. The perfume is preferably in the range from 0.001 to 3 wt %, most preferably 0.1 to 1 wt %. Many suitable examples of perfumes are provided in the CTFA (Cosmetic, Toiletry and Fragrance Association) 1992 International Buyers Guide, published by CFTA Publications and OPD 1993 Chemicals Buyers Directory 80th Annual Edition, published by Schnell Publishing Co.

It is commonplace for a plurality of perfume components to be present in a formulation. In the compositions of the present invention it is envisaged that there will be four or more, preferably five or more, more preferably six or more or even seven or more different perfume components.

In perfume mixtures preferably 15 to 25 wt% are top notes. Top notes are defined by Poucher (Journal of the Society of Cosmetic Chemists 6(2):80 [1955]). Preferred top-notes are selected from citrus oils, linalool, linalyl acetate, lavender, dihydromyrcenol, rose oxide and cis-3-hexanol.

Perfume and top note may be used to cue the whiteness benefit of the invention.

It is preferred that the laundry treatment composition does not contain a peroxygen bleach, e.g., sodium percarbonate, sodium perborate, and peracid. It is preferred that the laundry treatment composition does not contain hypochlorite bleach.

POLYMERS

The composition may comprise one or more polymers. Examples are carboxymethylcellulose, poly (ethylene glycol), poly(vinyl alcohol), polycarboxylates such as polyacrylates, maleic/acrylic acid copolymers and lauryl methacrylate/acrylic acid copolymers.

Polymers present to prevent dye deposition, for example poly(vinylpyrrolidone), poly(vinylpyridine-N-oxide), and poly(vinylimidazole), are preferably absent from the formulation.

ENZYMES

The laundry treatment composition may contain an enzyme. Preferred enzymes are disclosed in WO 2007/087243 and WO 2007/087257.

**Examples**

**Example 1 Synthesis of dye monomer**

Reaction scheme:

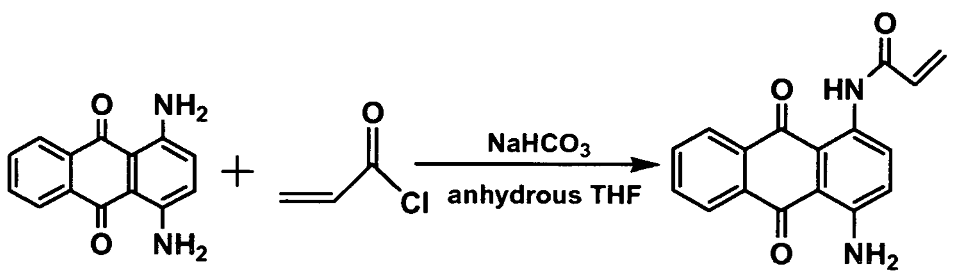


1,4-Diaminoanthraquinone (DAQ) was purchased from Aldrich, (90% technical grade) and used as supplied.

The dye monomer was prepared by the reaction of DAQ (1,4-Diaminoaquinone) and Ac (acryloyl chloride) in the presence of sodium dicarbonate. A mixture of 150ml anhydrous THF, 1g DAQ and 0.6g sodium dicarbonate was charged into 250ml three-necked round bottom flask equipped with a condenser, a dropping funnel, and a magnetic stirring bar. The flask was then maintained at R.T. while 0.38g Ac dissolved in 5ml anhydrous THF was added from the dropping funnel for 3h. The reaction mixture was stirred at 25 °C for another 20h. The reaction mixture was filtered to remove the insoluble solids occurred during the reaction process 20h later, the clear solution was dried by using rotary evaporation pressure reduced meter, then violet powder was obtained and washed with water for three times, the powder was completely dried under vacuum at 60 °C for 24h. The structure of DAQ-AC was confirmed using NMR and showed that the reaction had gone to greater than 88% completion. Consequently greater than 88% of the anthraquinones

contained one $NHCOCH=CH_2$ groups.

**Example 2 Synthesis of dye containing polymers**

Reaction Scheme:

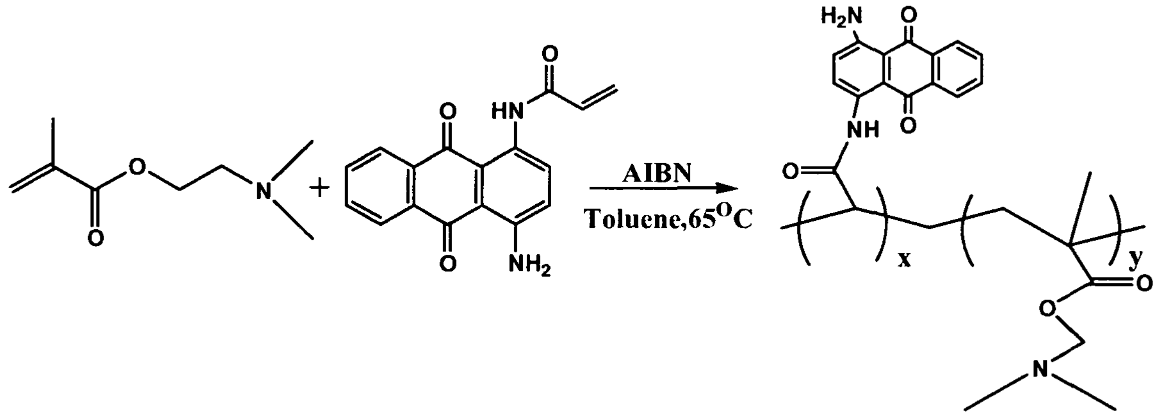


A solution of 3g dimethyl amino ethyl methacrylate (DMAEMA), 0.03g DAQ-Ac and 0.06g AIBN in 10ml toluene was charged into a dry $N_2$ gas purged two-necked tube with a condenser and a magnetic stirring bar. The tube was sealed and placed in a regulated thermostat bath at 65 °C for 24hours. The solution was precipitated in five-fold excess of petroleum ether for three times after the reaction, followed by drying under vacuum at 40 °C for 24h. The composition of the co-polymers was regulated via the control of the primary usages of dye monomer and functional monomer. In the experiments, the amounts of dye monomer added were 1 wt %, 2 wt %, 5 wt % and 10 wt % respectively.

**Example 3 UV-VIS of dye polymers**

The UV-Vis spectra of the dye polymers of example 2 were recorded in demineralised water at 1g/L dye polymer. The results are given in the table below.

| Monomer 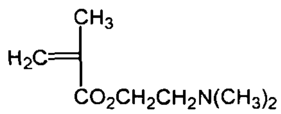 | Dye-monomer 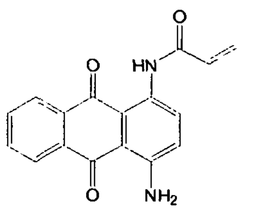 | λmax in range 400-700nm | Absorbance (1cm) @ λmax for 1g/L in water |
|---|---|---|---|
| 99 | 1 | 541 | 0.078 |
| 98 | 2 | 543 | 0.28 |
| 95 | 5 | 544 | 0.72 |
| 90 | 10 | 546 | 1.10 |

The experiment was repeated with the addition of the dye polymers of example 3. The dye polymers were dosed at 0.125wt% on formulation. Before and after the 1st, 2nd and 4th wash the CIE L*a*b* values of the fabrics were recorded using a reflectometer (UV-excluded). The deposition of the dye-polymers to the fabrics was expressed as the Δb value such that

$$\Delta b = b(\text{control}) - b(\text{dye polymer})$$

+ve values indicate a blueing of the fabric, due to dye-polymer deposition.

| Dye-polymer | Δb $2^{nd}$ wash | | Δb $4^{th}$ wash | |
|---|---|---|---|---|
| | cotton | polyester | Cotton | polyester |
| 2wt% | 0.3 | 0.1 | 0.5 | 0.2 |
| 5wt% | 1.1 | 0.5 | 1.5 | 0.7 |
| 10wt% | 1.7 | 0.9 | 2.1 | 1.1 |

The dye-polymers deposit to both cotton and polyester.

An added advantage is that the dye-polymer also facilitates soil removal and alter fabric feel.

**<u>Example 5: Dye deposition experiments</u>**

The experiment of example 4 was repeated using the following polymers:

| | Dye-Monomer | Co-monomer 1 | Co-monomer 2 |
|---|---|---|---|
| Polymer A | 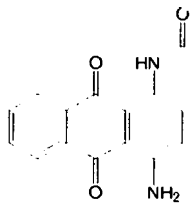 5 | 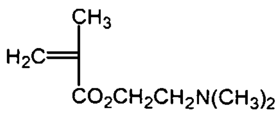 75 | Styrene 20 |
| Polymer B | 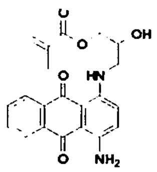 5 | 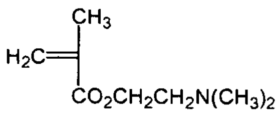 95 | 0 |

The results are shown in the table below:

| Dye-polymer | Δb $4^{th}$ wash | |
|---|---|---|
| | Cotton | polyester |
| A | 0.4 | 0.3 |
| B | 0.6 | 0.3 |

### Claims

**1.** A detergent composition comprising from 2 to 70 wt % of a surfactant together with from 0.0001 to 10 wt% of a dye-polymer of molecular weight of at least 500, wherein the dye-polymer is obtainable by polymerisation of:

(a) a dye monomer, the dye monomer an uncharged alkene covalently bound to a dye, the dye monomer having a molar extinction coefficient at a wavelength in the range 400 to 700nm of at least 1000 $mol^{-1}$ L $cm^{-1}$, and

(b) one or more further alkene comonomer(s), the alkene monomer(s) having molar extinction coefficient at a wavelength in the range 400 to 700nm that is less than 100 $mol^{-1}$ L $cm^{-1}$, wherein the dye polymer at 1g/L sodium dodecyl sulfate aqueous solution at pH=7 has a solubility of greater than 1mg/L, wherein the dye is an organic dye selected from the following chromophore classes: anthraquinone; azo; and, methine and greater than 50wt% of the co-monomers are selected from co-monomer that have a molecular weight of less than 300

and contain an amine.

2. A detergent composition according to claim 1, wherein the dye monomer is of the form:

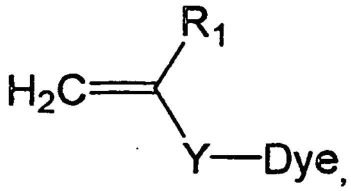

wherein Y is an organic bridging group covalently connecting a dye to the alkene moiety of the dye monomer and $R_1$ is selected from: H; alkyl; aryl; halogen; ester; acid amide; and, CN.

3. A detergent composition according to claim 2, wherein the organic bridging group is selected from: $-CONR_4-$; $-NR_4CO-$; $-COOR_4-$;$-NR_4-$; -O-; -S-; $-SO_2-$; $-SO_2NR_4-$; $-N(COR_4)-$; and - $N(SO_2R_4)-$; wherein $R_4$ is selected from: H; C1-C6 branched or linear alkyl; phenyl and benzyl groups; wherein R4 has 0 to 1 spacing units selected from: -O-; -S-; $-SO_2-$; -C(O)O-; - OC(O)-; and an amine.

4. A detergent composition according to claim 2, wherein the organic bridging group is $-CONR_4-$.

5. A detergent composition according to any one of claims 3 or 4, wherein $R_4$ is selected: from: H and Me.

6. A detergent composition according to any one of claims 2 to 5, wherein the Y group is bound directly to a carbon atom of an aromatic ring of the dye.

7. A detergent composition according to any one of the preceding claims, wherein the organic dye is selected from the following chromophore classes: anthraquinone; and, mono-azo.

8. A detergent composition according to any one of claims. 2 to 7, wherein $R_1$ is selected from: H; Me; Et; Pr; $CO_2C1$-$C_4$ branched and linear alkyl chains; phenyl; benzyl; CN; Cl; and, F.

9. A detergent composition according to claim 8, wherein $R_1$ is selected from: H; and, Me.

10. A detergent composition according to any one of the preceding claims, wherein the dye-monomer is selected from:

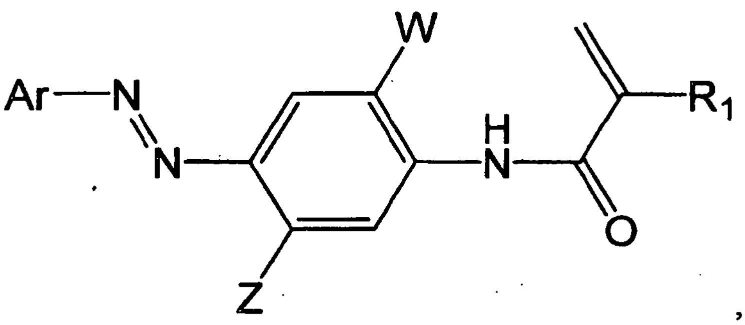

,

wherein Ar is an aromatic or heteroaromatic group and Z is selected from: H; Me; Cl; and, $NHCOCH_3$; and W is selected from: H; $CH_3O$; $C_2H_5O$; and, Cl.

11. A detergent composition according to claim 2 to 10, wherein the dye-monomer is selected from:

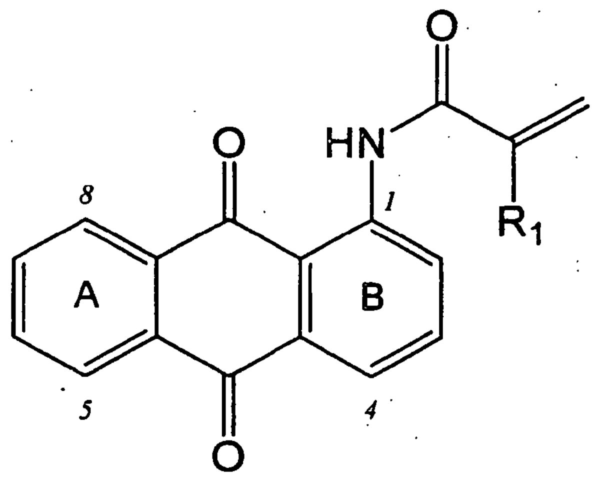

12. A detergent composition according to claim 11, wherein the A and B ring are further substituted by one or more groups selected from: $NH_2$; NHAr; $NHR_5$; $NR_5R_6$; OH; Cl; Br, CN, OAr; $NO_2$; $SO_2OAr$; Me; and, NHCOC(R1)=$CH_2$ wherein $R_5$ and $R_6$ are independently selected from C1-C8 branched, cyclic or linear alkyl which may be substituted by OH, OMe, Cl or CN.

13. A detergent composition according to claim 12, wherein the A and B ring are further substituted at the 4, 5 or 8 position by at least one group selected from $NH_2$, NHAr, and $NHR_5$, $NR_5R_6$.

14. A detergent composition according to any one of the preceding claims, wherein the comonomer is selected from:

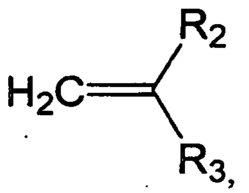

wherein $R_2$ and $R_3$ are independently selected from: H, C1-C8 branched, cyclic and linear alkyl chains, C(O)OH, $CO_2$C1-C18 branched and linear alkyl chains, -C(O)N (C1-C18)2; -C(O)N(C1-C18)H; -C(O)NH2; heteroaromatic, phenyl, benzyl, polyether, cyano, Cl and F.

15. A detergent composition according to claim 14, wherein $R_2$ and $R_3$ of the comonomer is further substituted by groups selected from: charged; and, uncharged organic, the further groups having a total molecular weight of less than 400.

16. A detergent composition according to claim 2, wherein the dye-monomer is selected from:

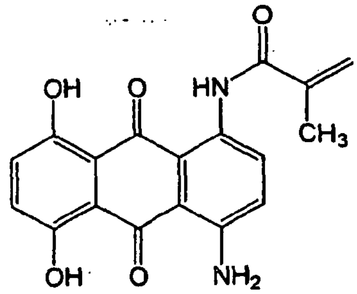

;

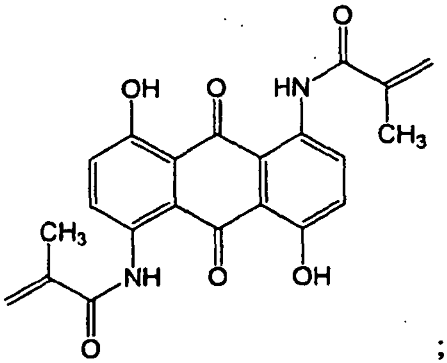

;

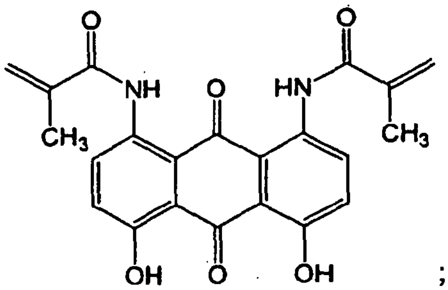 ; 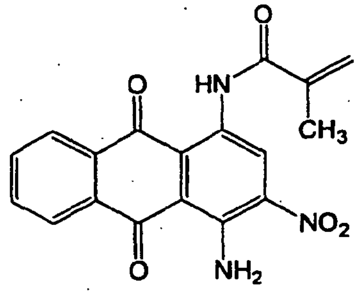 ;

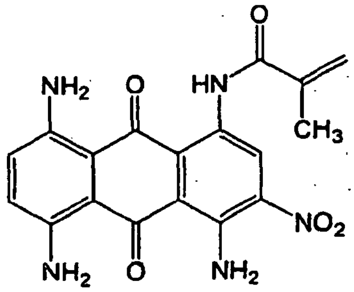 ; 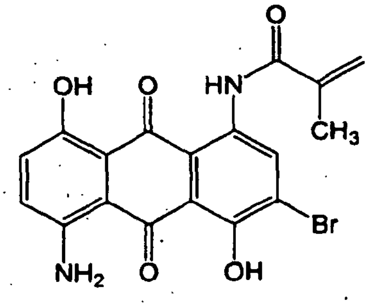 ;

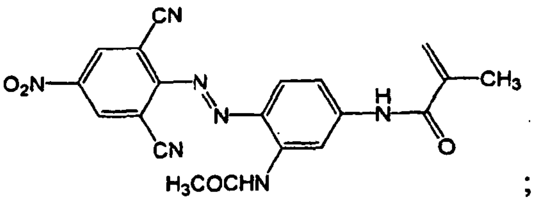 ; 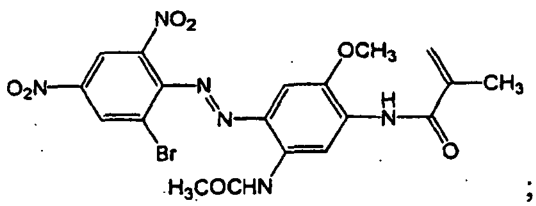 ;

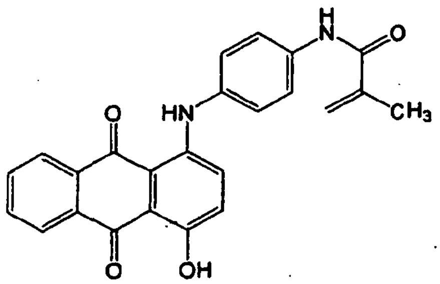

and,

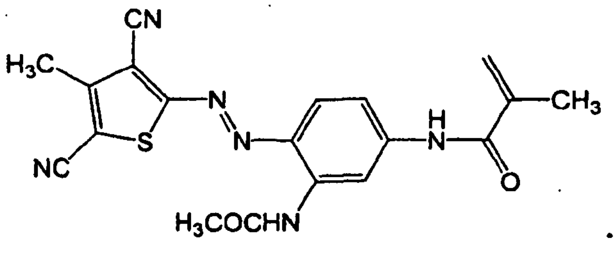 .

**17.** A detergent composition according to any one of the preceding claims, wherein detergent composition comprises a fluorescent agent.

**18.** A domestic method of treating a textile, the method comprising the steps of:

(i) treating a textile with an aqueous solution of the dye-polymer as defined in any one of claims 1 to 16, the

aqueous solution comprising from 10 ppb to 100 ppm of the dye-polymer; and, from 0.0 g/L to 3 g/L of a surfactant;
(ii) optionally rinsing; and,
(iii) drying the textile.

**19.** A domestic method of treating a textile according to claim 18, wherein the aqueous solution comprises from 0.3 to 2 g/L of a surfactant.

**Patentansprüche**

**1.** Waschmittelzusammensetzung,
die 2 bis 70 Gew.-% eines Tensids zusammen mit 0,0001 bis 10 Gew.-% eines Farbstoffpolymers mit einem Molekulargewicht von mindestens 500 aufweistt, wobei das Farbstoffpolymer durch Polymerisieren von Folgendem erhalten werden kann:

(a) einem Farbstoffmonomer, wobei das Farbstoffmonomer ein an einen Farbstoff kovalent gebundenes ungeladenes Alken ist, wobei das Farbstoffmonomer einen molaren Extinktionskoeffizienten bei einer Wellenlänge im Bereich von 400 bis 700 nm von mindestens 1000 $L \cdot mol^{-1} \cdot cm^{-1}$ hat, und
(b) einem oder mehreren weiteren Alken-Comonomeren, wobei das (die) Alkenmonomer(e) einen molaren Extinktionskoeffizienten bei einer Wellenlänge im Bereich von 400 bis 700 nm aufweist (aufweisen), der kleiner als 100 $L \cdot mol^{-1} \cdot cm^{-1}$ ist, wobei das Farbstoffpolymer bei einer wässrigen Natriumdodecylsulfatlösung mit 1 g/l bei pH = 7 eine Löslichkeit von mehr als 1 mg/l aufweist, wobei der Farbstoff ein organischer Farbstoff ist, der aus den folgenden Chromophorklassen ausgewählt ist: Antrachinon, Azo und Methin, und mehr als 50 Gew.-% der Comonomere aus einem Comonomer ausgewählt sind, das ein Molekulargewicht von weniger als 300 aufweist und ein Amin enthält.

**2.** Waschmittelzusammensetzung nach Anspruch 1,
wobei das Farbstoffmonomer die Formel

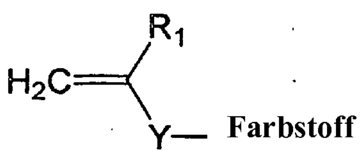

hat, worin Y ein organischer Brückenrest ist, der einen Farbstoff kovalent an eine Alken-Einheit des Farbstoffmonomers bindet, und $R_1$ ausgewählt ist aus: H, Alkyl, Aryl, Halogen, Ester, Säureamid und CN.

**3.** Waschmittelzusammensetzung nach Anspruch 2, wobei der organische Brückenrest ausgewählt ist aus: $-CONR_4-$, $-NR_4CO-$, $-COOR_4-$, $-NR_4-$, -O-, -S-, $-SO_2-$, $-SO_2NR_4-$, $-N(COR_4)-$ und $-N(SO_2R_4)-$, worin $R_4$ ausgewählt ist aus: H, einer verzweigten oder linearen $C_1$-$C_6$-Alkylgruppe, Phenyl- und Benzylgruppe, wobei $R_4$ 0 bis 1 Abstandseinheiten aufweist, die ausgewählt sind aus: -O- , -S-, $-SO_2-$, -C(O)O-, -OC(O)- und einem Amin.

**4.** Waschmittelzusammensetzung nach Anspruch 2,
wobei der organische Brückenrest $-CONR_4-$ ist.

**5.** Waschmittelzusammensetzung nach einem der Ansprüche 3 oder 4,
wobei $R_4$ aus H und Me ausgewählt ist.

**6.** Waschmittelzusammensetzung nach einem der Ansprüche 2 bis 5,
wobei der Rest Y direkt an ein Kohlenstoffatom eines aromatischen Rings des Farbstoffs gebunden ist.

**7.** Waschmittelzusammensetzung nach einem der vorstehenden Ansprüche,
wobei der organische Farbstoff aus den folgenden Chromophorklassen ausgewählt ist: Anthrachinon und Monoazo.

**8.** Waschmittelzusammensetzung nach einem der Ansprüche 2 bis 7,
wobei $R_1$ ausgewählt ist aus H, Me, Et, Pr, verzweigten und linearen $CO_2C_1$-$C_4$-Alkylketten, Phenyl, Benzyl, CN,

Cl und F.

9. Waschmittelzusammensetzung nach Anspruch 8, wobei $R_1$ aus H und Me ausgewählt ist.

10. Waschmittelzusammensetzung nach einem der vorstehenden Ansprüche, wobei das Farbstoffmonomer ausgewählt ist aus:

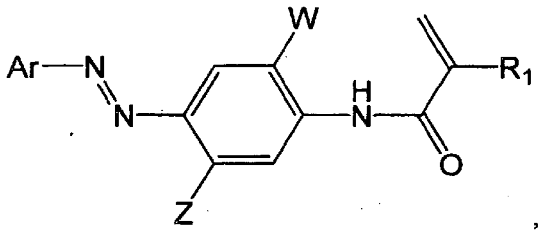

,

worin Ar ein aromatischer oder heteroaromatischer Rest ist und Z ausgewählt ist aus: H, Me, Cl und $NHCOCH_3$, und W ausgewählt ist aus: H, $CH_3O$, $C_2H_5O$ und Cl.

11. Waschmittelzusammensetzung nach den Ansprüchen 2 bis 10, wobei das Farbstoffmonomer ausgewählt ist aus:

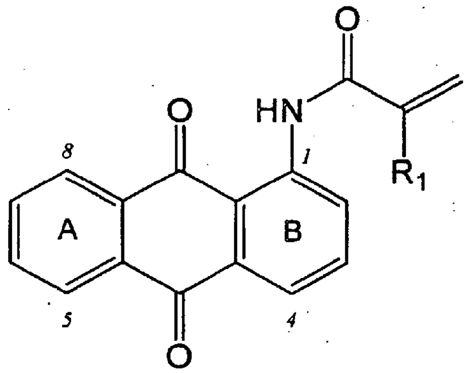

.

12. Waschmittelzusammensetzung nach Anspruch 11, wobei die Ringe A und B ferner mit einem oder mehreren Resten substituiert sind, die ausgewählt sind aus: $NH_2$, NHAr, $NHR_5$, $NR_5R_6$, OH, Cl, Br, CN, OAr, $NO_2$, $SO_2OAr$, Me und $NHCOC(R_1)=CH_2$, worin $R_5$ und $R_6$ unabhängig voneinander aus einer verzweigten, cyclischen oder linearen $C_1$-$C_8$-Alkylgruppe ausgewählt sind, die mit OH, OMe, Cl oder CN substituiert sein kann.

13. Waschmittelzusammensetzung nach Anspruch 12, wobei die Ringe A und B ferner an der Position 4, 5 oder 8 mit zumindest einem Rest substituiert sind, der aus $NH_2$, NHAr und $NHR_5$, $NR_5R_6$ ausgewählt ist.

14. Waschmittelzusammensetzung nach einem der vorstehenden Ansprüche, wobei das Comonomer ausgewählt ist aus:

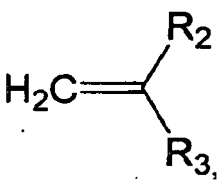

worin $R_2$ und $R_3$ unabhängig voneinander ausgewählt sind aus: H, verzweigten, cyclischen und linearen $C_1$-$C_8$-Alkylketten, C(O)OH, verzweigten und linearen $CO_2C_1$-$C_{18}$-Alkylketten, -C(O)N($C_1$-$C_{18}$)$_2$, -C(O)N($C_1$-$C_{18}$)H, -C(O)$NH_2$, einem heteroaromatischen Rest, Phenyl, Benzyl, Polyether, Cyano, Cl und F.

**15.** Waschmittelzusammensetzung nach Anspruch 14,
wobei $R_2$ und $R_3$ des Comonomers ferner mit Resten substituiert sind, die ausgewählt sind aus: geladenen und ungeladenen organischen Resten, wobei die weiteren Reste insgesamt ein Molekulargewicht von weniger als 400 haben.

**16.** Waschmittelzusammensetzung nach Anspruch 2,
wobei das Farbstoffmonomer ausgewählt ist aus:

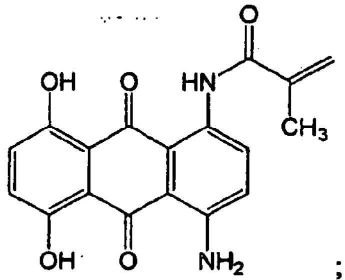 ; 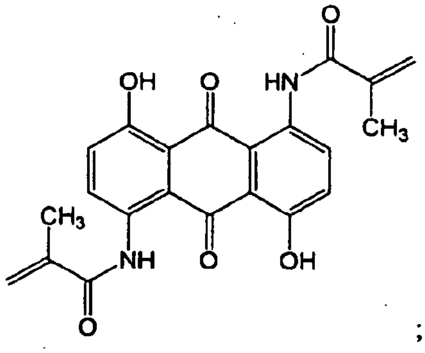 ;

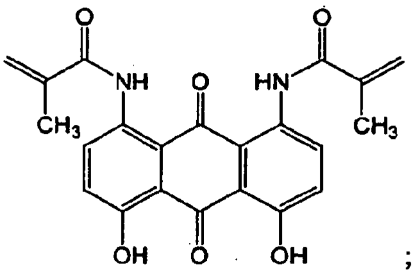 ; 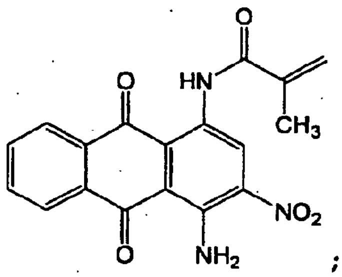 ;

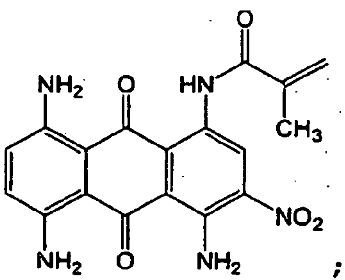 ; 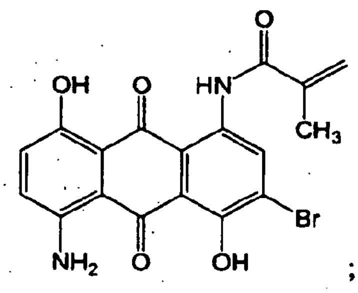 ;

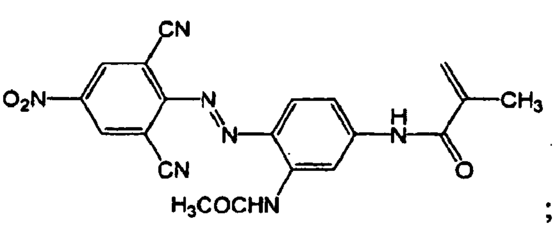 ; 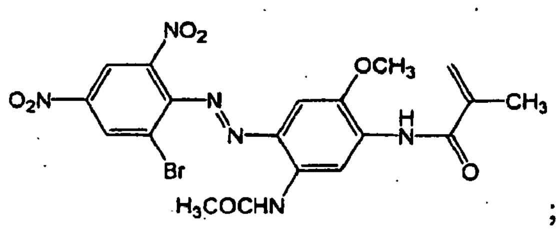 ;

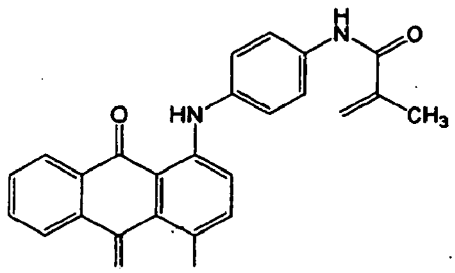

und

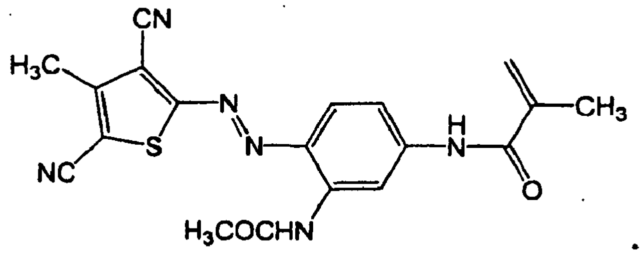

17. Waschmittelzusammensetzung nach einem der vorstehenden Ansprüche, wobei die Waschmittelzusammensetzung einen Fluoreszenzstoff aufweist.

18. Verfahren zum Behandeln eines Textilmaterials im Haushalt, wobei das Verfahren die folgenden Schritte aufweist:

(i) Behandeln eines Textilmaterials mit einer wässrigen Lösung des Farbstoffpolymers nach einem der Ansprüche 1 bis 16, wobei die wässrige Lösung 10 ppb bis 100 ppm des Farbstoffpolymers und 0,0 bis 3 g/l eines Tensids aufweist;
(ii) gegebenenfalls Spülen und
(iii) Trocknen des Textilmaterials.

19. Verfahren zum Behandeln eines Textilmaterials im Haushalt nach Anspruch 18, wobei die wässrige Lösung 0,3 bis 2 g/l eines Tensids aufweist.

## Revendications

1. Composition détergente comprenant de 2 à 70 % en poids d'un tensioactif avec de 0,0001 à 10 % en poids d'un polymère colorant de poids moléculaire d'au moins 500, dans laquelle le polymère colorant peut être obtenu par polymérisation de :

(a) un monomère colorant, le monomère colorant étant un alcène non chargé lié de manière covalente à un colorant, le monomère colorant ayant un coefficient d'extinction molaire à une longueur d'onde comprise dans la plage allant de 400 à 700 nm d'au moins 1000 $mol^{-1}$ L $cm^{-1}$, et
(b) un ou plusieurs autres comonomères d'alcène, le ou les monomères d'alcène ayant un coefficient d'extinction molaire à une longueur d'onde comprise dans la plage allant de 400 à 700 nm qui est inférieur à 100 $mol^{-1}$ L $cm^{-1}$, dans laquelle le polymère colorant en solution aqueuse de 1 g/l de dodécylsulfate de sodium à pH = 7 a une solubilité supérieure à 1 mg/l, dans laquelle le colorant est un colorant organique choisi parmi les classes de chromophores suivantes : anthraquinone ; azo ; et méthine et plus de 50 % en poids des comonomères sont choisis parmi des comonomères qui ont un poids moléculaire inférieur à 300 et qui contiennent une amine.

2. Composition détergente selon la revendication 1, dans laquelle le monomère colorant a la forme :

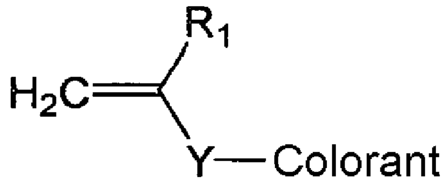

,

dans laquelle Y est un groupe pontant organique liant de manière covalente un colorant au fragment alcène du monomère colorant et $R_1$ est choisi parmi : H ; un groupe alkyle ; un groupe aryle ; un atome d'halogène ; un ester ; un amide acide et CN.

**3.** Composition détergente selon la revendication 2, dans laquelle le groupe pontant organique est choisi parmi $-CONR_4-$ ; $-NR_4CO-$ ; $-COOR_4-$ ; $-NR_4-$ ; -O- ; -S- ; $-SO_2-$ ; $-SO_2NR_4-$ ; $-N(COR_4)-$ ; et $-N(SO_2R_4)-$ ; où $R_4$ est choisi parmi : H ; un groupe alkyle en $C_1$-$C_6$ linéaire ou ramifié ; les groupes phényle et benzyle ; où $R_4$ comprend de 0 à 1 motif d'espacement choisis parmi : -O- ; -S- ; $-SO_2-$ ; -C(O)O- ; -OC(O)- ; et une amine.

**4.** Composition détergente selon la revendication 2, dans laquelle le groupe pontant organique est $-CONR_4-$.

**5.** Composition détergente selon l'une quelconque des revendications 3 ou 4, dans laquelle $R_4$ est choisi parmi : H et Me.

**6.** Composition détergente selon l'une quelconque des revendications 2 à 5, dans laquelle le groupe Y est directement lié à un atome de carbone d'un cycle aromatique du colorant.

**7.** Composition détergente selon l'une quelconque des revendications précédentes, dans laquelle le colorant organique est choisi parmi les classes de chromophores suivantes : anthraquinone ; et mono-azo.

**8.** Composition détergente selon l'une quelconque des revendications 2 à 7, dans laquelle $R_1$ est choisi parmi : H ; Me ; Et ; Pr ; des chaînes $CO_2$ (alkyle en $C_1$-$C_4$ linéaire ou ramifié) ; un groupe phényle ; un groupe benzyle ; CN ; Cl ; et F.

**9.** Composition détergente selon la revendication 8, dans laquelle $R_1$ est choisi parmi : H ; et Me.

**10.** Composition détergente selon l'une quelconque des revendications précédentes, dans laquelle le monomère colorant est choisi parmi :

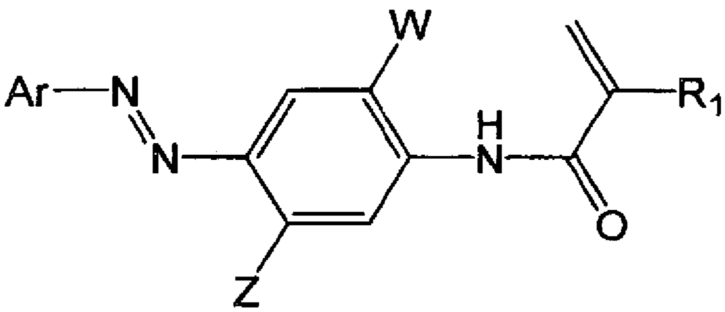

dans laquelle Ar est un groupe aromatique ou hétéroaromatique et Z est choisi parmi : H ; Me ; Cl ; et $NHCOCH_3$ ; et W est choisi parmi : H ; $CH_3O$ ; $C_2H_5O$ ; et Cl.

**11.** Composition détergente selon l'une quelconque des revendications 2 à 10, dans laquelle le monomère colorant est choisi parmi :

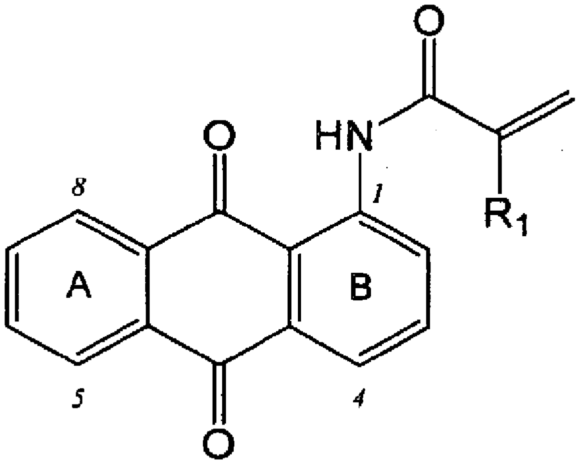

**12.** Composition détergente selon la revendication 11, dans laquelle les cycles A et B sont en outre substitués par un ou plusieurs groupes choisis parmi : $NH_2$ ; NHAr ; $NHR_5$ ; $NR_5R_6$ ; OH ; Cl ; Br ; CN ; OAr ; $NO_2$ ; $SO_2OAr$ ; Me ; et $NHCOC(R_1))=CH_2$ ; où $R_5$ et $R_6$ sont indépendamment choisis parmi un groupe alkyle en C1-C8 ramifié, cyclique ou linéaire qui peut être substitué par OH, OMe, Cl ou CN.

**13.** Composition détergente selon la revendication 12, dans laquelle les cycles A et B sont en outre substitués en position 4, 5 ou 8 par au moins un groupe choisi parmi $NH_2$, NHAr, $NHR_5$ et $NR_5R_6$.

**14.** Composition détergente selon l'une quelconque des revendications précédentes, dans laquelle le comonomère est choisi parmi :

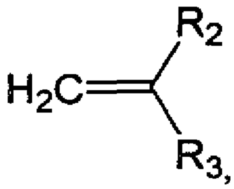

dans laquelle $R_2$ et $R_3$ sont choisis indépendamment parmi : H ; les chaînes alkyle en $C_1$-$C_8$ ramifiées, cycliques et linéaires ; C(O)OH ; les chaînes $CO_2$ (alkyle en $C_1$-$C_{18}$ linéaire et ramifiée) ; -C(O)N($C_1$-$C_{18}$)$_2$ ; -C(O)N($C_1$-$C_{18}$)H ; -C(O)$NH_2$ ; un groupe hétéroaromatique ; un groupe phényle ; un groupe benzyle ; un polyéther ; un groupe cyano ; Cl et F.

**15.** Composition détergente selon la revendication 14, dans laquelle les groupes $R_2$ et $R_3$ du comonomère sont en outre substitués par des groupes choisis parmi : un groupe chargé ; et un groupe organique non chargé, les autres groupes ayant un poids moléculaire total inférieur à 400.

**16.** Composition détergente selon la revendication 2, dans laquelle le monomère colorant est choisi parmi :

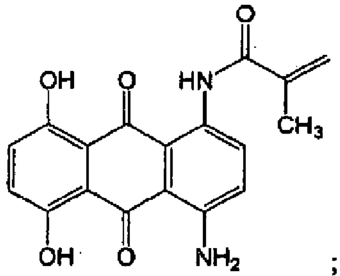 ; 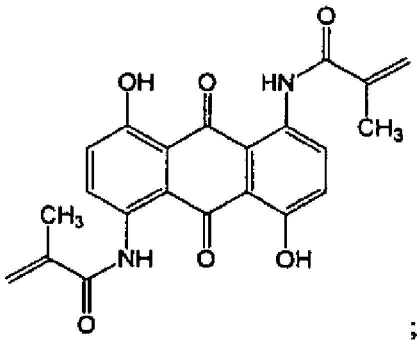 ;

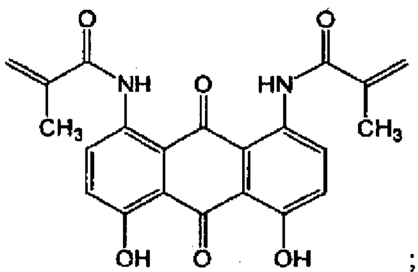 ; 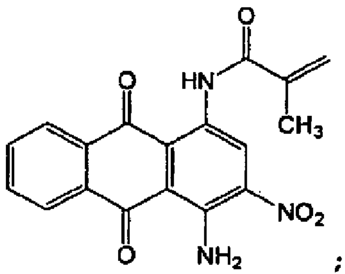 ;

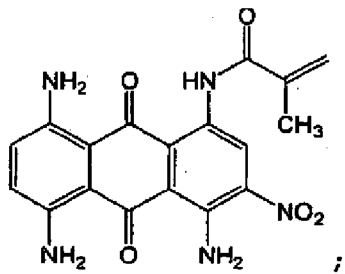 ; 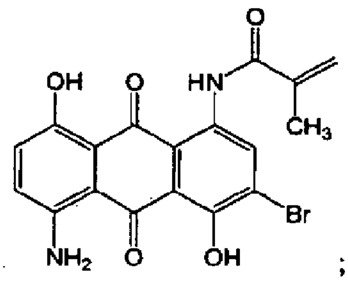 ;

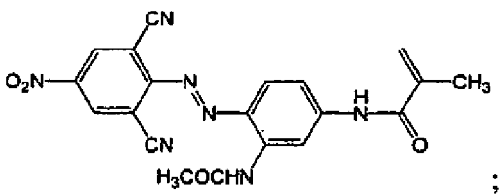 ; 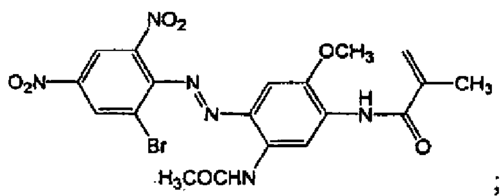 ;

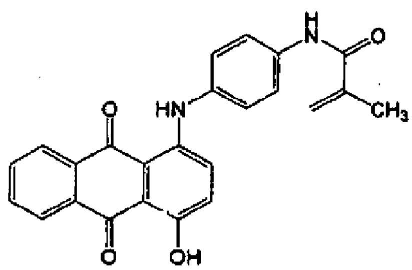

et

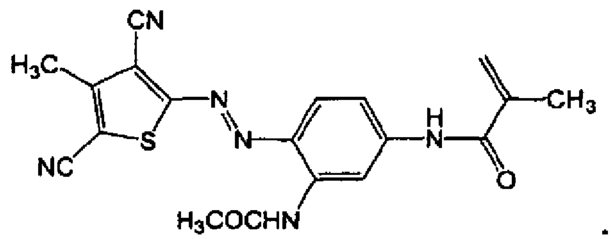

17. Composition détergente selon l'une quelconque des revendications précédentes, dans laquelle la composition détergente comprend un agent fluorescent.

18. Procédé domestique de traitement d'un textile, le procédé comprenant les étapes de :

(i) traitement d'un textile avec une solution aqueuse du polymère colorant tel que défini selon l'une quelconque des revendications 1 à 16, la solution aqueuse comprenant de 10 ppb à 100 ppm du polymère colorant ; et de 0,0 g/l à 3 g/l d'un tensioactif ;
(ii) rinçage facultatif ; et
(iii) séchage du textile.

19. Procédé domestique de traitement d'un textile selon la revendication 18, dans lequel la solution aqueuse comprend de 0,3 à 2 g/l d'un tensioactif.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2005003274 A
- WO 2006055787 A
- WO 2006055843 A
- WO 2007087252 A
- WO 2008091524 A
- WO 2008100445 A
- WO 2008009579 A
- US 3926830 A
- EP 0128619 A
- WO 2005068598 A
- WO 2005068596 A
- US 4943617 A
- US 5055602 A
- WO 2005021663 A
- US 5362812 A
- EP 328177 A
- EP 070074 A
- EP 346995 A
- EP 0239910 A
- EP 0384070 A
- WO 2007087243 A
- WO 2007087257 A


### Non-patent literature cited in the description


- Industrial Dyes. Wiley VCH, 2003
- **SCHWARTZ ; PERRY.** Surface Active Agents. Interscience, 1949, vol. 1
- **SCHWARTZ ; PERRY ; BERCH.** SURFACE ACTIVE AGENTS. Interscience, 1958, vol. 2
- McCutcheon's Emulsifiers and Detergents. Manufacturing Confectioners Company
- **H. STACHE.** Tenside-Taschenbuch. Carl Hauser Verlag, 1981
- *CTFA,* 1992
- International Buyers Guide. Schnell Publishing Co, 1993
- **POUCHER.** *Journal of the Society of Cosmetic Chemists,* 1955, vol. 6 (2), 80